# EUROPEAN PATENT APPLICATION

(11) **EP 1 328 120 A1**
(43) Date of publication of application: **16.07.2003**
(21) Application number: 01967700.4
(22) Date of filing: 17.09.2001
(51) Int. Cl.: H04N 5/92

(54) **IMAGE RECORDING/REPRODUCING DEVICE AND METHOD, DISK, AND IMAGE REPRODUCING DEVICE**

(30) Priority: 18.09.2000 JP 2000281555; 13.03.2001 JP 2001069988
(71) Applicant: Matsushita Electric Industrial Co., Ltd., Kadoma-shi, Osaka-fu, 571-8501 (JP)
(72) Inventor: ITOH, Masanori, Moriguchi-shi, Osaka 570-0096 (JP)
(74) Representative: Schorr, Frank, Dr.
(86) International application number: JP0108046
(87) International publication number: WO02023898

(57) **Abstract**

A video recording/reproducing device/method is provided, which allows ancillary information to be added to a JPEG file recorded on an optical disk within a short time, and keeps the display speed of images even after the addition of the ancillary information. Address information (offset value) for skipping retrieval information (application data: APP4) is pre-recorded in an APP5 marker segment so as to be positioned ahead of the retrieval information, and compressed data are read directly by referring to the address information without reading the retrieval information when a static image is to be displayed.

## Description

### TECHNICAL FIELD

The present invention relates to a video recording/reproducing device and a video recording/reproducing method in which static images are JPEG-compressed and recorded in a recording medium such as an optical disk. The present invention also relates to a disk in which JPEG-compressed static images are recorded, and to a video reproducing device for reproducing static images from such a disk.

### BACKGROUND ART

In a recent video recording/reproducing device, a static image is subjected to JPEG (Joint Photographic Experts Group) compression and is recorded in a recording medium in a file format in compliance with a DCF (design rule for camera file system) basic file of the DCF Standard (standard provided by the Japanese Electronic Industry Development Association (JEIDA)). A data structure of a DCF basic file is such that marker segments of a SOI (start of image), APP1 (application data 1), DQT (define quantization table), DHT (define Huffman table), SOF (start of frame), SOS (start of scan), and EOI (end of frame) defined by the JPEG standard are used in forms in compliance with the JPEG standard. Further, according to the DCF standard, a data structure inside each marker segment is specified more strictly. Each marker segment is composed of three of a marker code, a marker segment length, and data in a marker segment. Strictly speaking, a SOI marker and an EOI marker are not classified as marker segments, since each marker is composed of a marker code alone. However, they hereinafter sometimes are referred to as marker segments for convenience in description. Further, the DCF basic file can be referred to as a JPEG file, since it is a file containing bit streams defined by the JPEG standard. Furthermore, the DCF basic file is specified so as to contain, in the APP1, ancillary information such as date and time when JPEG-compressed video data were taken, a name of a camera used, etc., and a thumbnail of the image (reduced image). The ancillary information inside the APP1 as a whole is called Exif attribute information.

It should be noted that there are some cases in which, after recording a static image, information regarding a subject that has been shot (for instance, a name of the subject, a location of shooting) is stored in the static image file so as to be archived. The ancillary information concerning the video data is referred to as meta-data. Exif attribute information used in the DCF standard is a kind of meta-data, but the Exif attribute information centers on optical parameters such as an f number, a shutter speed, etc., and is not capable of describing the contents of the image such as the subject, the location, etc. To make up for this, meta-data concerning the contents of the image could be stored in a DCF basic file, so as to be utilized in image retrieval. In this case, a data area in which various information can be set such as the type of subject and the name of location of shooting, etc. is secured, where the meta-data may be set as character information. In the case where the meta-data are stored in the DCF basic file, APP0 and APP3 to APP15 marker segments defined by the JPEG standard can be used. It should be noted that APP1 and APP2 had better not be used since the use of the same is specified by the DCF standard.

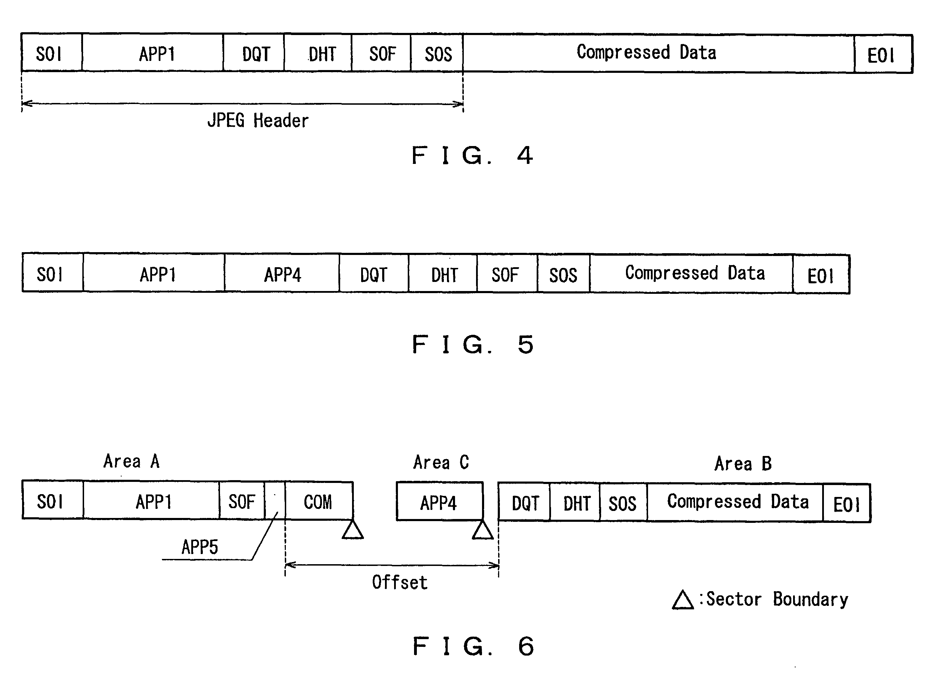

FIG. 4 illustrates a data structure and a physical data arrangement in the case where a DCF basic file is recorded on an optical disk. A JPEG file is composed of SOI, APP1, DQT, DHT, SOF, SOS, and EOI marker segments and the like, as well as compressed data. The marker segments ranging from the SOI marker segment to the SOS marker segment (ahead of the compressed data) are referred to as a JPEG header.

FIG. 5 illustrates a data structure and a physical data arrangement in the case where an APP4 marker segment is recorded additionally in a format in compliance with the JPEG standard with respect to a DCF basic file in which data have been recorded. The JPEG standard specifies that the APP4 marker segment should be arranged ahead of the compressed data and the SOS marker segment.

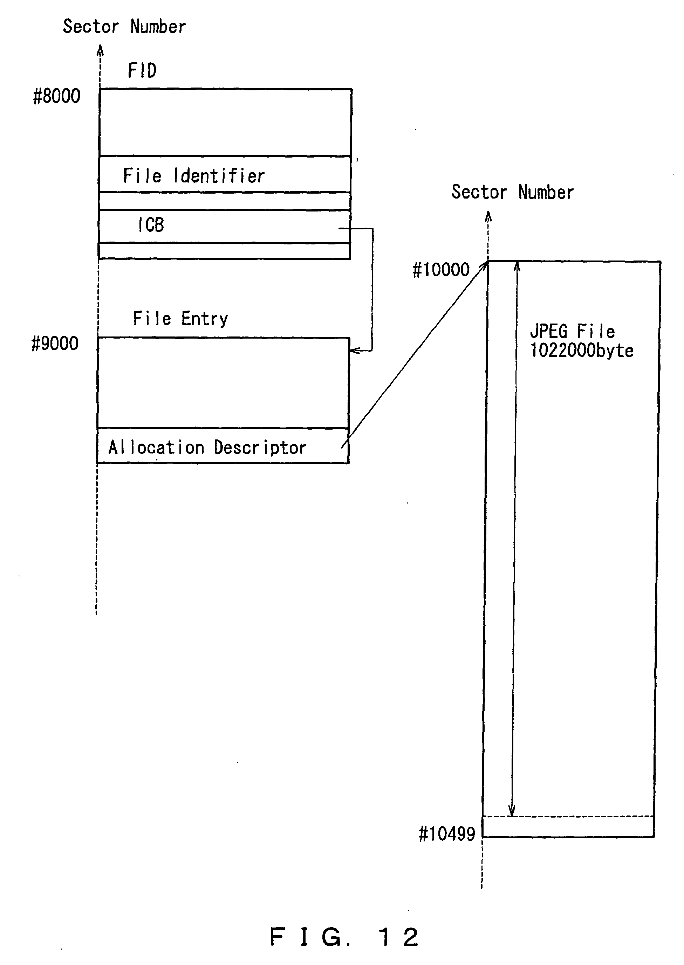

FIG. 12 illustrates a data structure and a data arrangement in the case where a JPEG file is subjected to file management by the UDF (universal disk format) file system. A JPEG file is referred to by an allocation descriptor inside a file entry, and the file entry is referred to by an ICB (information control block) inside a FID (file identifier descriptor). A file name is recorded in a file identifier field in the FID. The JPEG file occupies a data area of 1022000 bytes (about 1 Mbytes) from a sector numbered as 10000 (#10000), the file entry occupies a data area of approximately 2 Kbytes from a sector numbered as 9000, and the FID occupies a data area of approximately 64 bytes from a sector numbered as 8000.

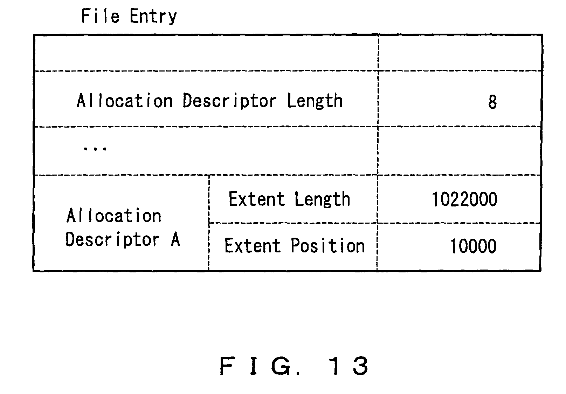

FIG. 13 shows set values of the allocation descriptor inside the file entry. The sector number of 10000 is set in an extent position field, and the data size of 1022000 bytes is set in an extent length field.

In a conventional recording/reproducing device, in the case where an application marker segment (APP4) is added to a JPEG file for adding ancillary information (meta-data), the application marker segment has to be put in the JPEG header. Therefore, a portion behind the APP1 (i.e., substantially an entirety of the JPEG file) has to be read into the device once, and the read-in portion has to be written back after the addition of the APP4. This is because in the case where new data are added to somewhere within a data file, generally it is necessary that a portion of the original data behind a position of addition is read into the device so as to save the portion of the original data, then the new data is written additionally, and thereafter, the portion of the original data behind the position of addition is written back.

Furthermore, in the case where after a JPEG file is recorded, ancillary information is added therein, and thereafter pieces of ancillary information are retrieved over a plurality of JPEG files, a seek of the pickup occurs every time ancillary information of one file is obtained. Thus, there is a drawback in that the processing requires an extremely long time.

As described above, there are problems concerning convenience in that it takes time in adding meta-data or the like in a video recording/reproducing device, and in that it makes a user wait when meta-data are retrieved.

### DISCLOSURE OF THE INVENTION

Therefore, to solve the above-described problems, it is an object of the present invention to provide a video recording/reproducing device and a video recording/reproducing method capable of adding ancillary information to a JPEG file already recorded on an optical disk within a short time, and keeping the display speed of an image even after the addition of the additional image.

Further, it is another object of the present invention to provide a video recording/reproducing device and a video reproducing device capable of, when retrieving ancillary information of image files over a plurality of files, carrying out the operation at enhanced speed.

Still further, it is another object of the present invention to provide a video recording/reproducing device and a video reproducing device capable of performing the display of thumbnail images contained in the ancillary information at enhanced speed even with respect to numerous files.

Furthermore, it is another object of the present invention to provide a recording/reproducing device capable of, when capturing image information having ancillary information in various data sizes via a digital interface or the like into a video recording/reproducing device, recording the image information in a form such that the addition of the ancillary information, the retrieval of various types of information contained in the ancillary information, and the display of thumbnail images contained in the ancillary information are performed at enhanced speed.

As described above, the present invention is intended to perform operations with respect to ancillary information of static images recorded in an optical disk at enhanced speed by reducing seek operations of a pickup.

To achieve the aforementioned objects, a first video recording/reproducing device according to the present invention includes header assembling means for generating header information containing ancillary information concerning video information, and recording means for recording at least the header information and the video information as a set, and the header information contains distance information indicative of a distance between specific pieces of ancillary information.

In the first video recording/reproducing device, it is preferable that the video information is JPEG-compressed data, and the ancillary information is a marker segment.

Further, in the first video recording/reproducing device, when desired ancillary information is added, the header assembling means preferably generates ancillary information containing new distance information with a data size of the desired ancillary information added therein.

To achieve the aforementioned objects, a first video recording/reproducing method according to the present invention includes the steps of assembling a header by generating header information containing ancillary information concerning video information, and recording at least the header information and the video information as a set, and the header information contains distance information indicative of a distance between specific pieces of ancillary information.

In the first video recording/reproducing method, it is preferable that the video information is JPEG-compressed data, and the ancillary information is a marker segment.

Further, in the first video recording/reproducing method, it is preferable that in the header assembling step, when desired ancillary information is added, header information is generated that contains new distance information with a data size of the desired ancillary information added therein.

To achieve the aforementioned objects, a disk according to the present invention is a disk in which at least video information and header information are recorded as a set, the header information containing ancillary information concerning the video information, and the header information contains distance information indicative of a distance between specific pieces of ancillary information present in the header information.

In the foregoing disk, it is preferable that the video information is JPEG-compressed data, and the ancillary information is a marker segment.

To achieve the aforementioned objects, a second video recording/reproducing device according to the present invention is a video recording/reproducing device for use with a recording medium that stores video information and header information containing ancillary information concerning the video information, and the device includes header information analyzing means for analyzing the header information so as to obtain ancillary information necessary for display of the video information. In the device, the header information contains distance information indicative of a distance between specific pieces of ancillary information, and the header information analyzing means refers to the distance information and skips analysis of relevant ancillary information.

To achieve the aforementioned objects, a third video recording/reproducing device according to the present invention includes recording means for recording a DCF basic file. In the device, the recording means records an APP1 marker segment containing Exif attribute information, and a marker segment containing distance information indicative of a distance between specific marker segments, in a first area on a recording medium, and a DCF basic primary image in a second area on the recording medium.

To achieve the aforementioned objects, a fourth video recording/reproducing device according to the present invention includes recording means for recording a DCF basic file, and the recording means records a SOI marker, an APP1 marker segment and/or a SOF marker segment, the APP1 marker segment containing Exif attribute information, and a marker segment containing distance information indicative of a distance between specific marker segments, in a first area on a recording medium, and a DCF basic primary image in a second area on the recording medium.

To achieve the aforementioned objects, a fifth video recording/reproducing device according to the present invention includes: header assembling means for generating header information containing ancillary information concerning video information; recording means for recording at least the header information and the video information as a set; and distance information recording means for recording distance information relevant to the header information. In the device, the distance information recording means records, as the distance information, information indicative of a distance between specific pieces of ancillary information present in the header information.

To achieve the aforementioned objects, a sixth video recording/reproducing device according to the present invention is a video recording/reproducing device for use with a recording medium that stores video information, header information containing ancillary information concerning the video information, and distance information indicative of a distance between specific pieces of the ancillary information, and the device includes header information analyzing means for analyzing the header information so as to obtain ancillary information necessary for display of the video information. In the device, the header information analyzing means refers to the distance information and skips analysis of relevant ancillary information.

To achieve the aforementioned objects, a seventh video recording/reproducing device according to the present invention includes header assembling means for generating JPEG header data concerning JPEG-compressed data, and recording means for recording at least the JPEG-compressed data and the JPEG header data as a set. In the device, when a plurality of the sets are recorded, the recording means records Exif attribute information and SOF marker segments contained in the JPEG header data over the plurality of the sets together in a specific area on a recording medium.

To achieve the aforementioned objects, an eighth video recording/reproducing device according to the present invention is a video recording/reproducing device for use with a recording medium that stores sets of JPEG-compressed data and JPEG header data, and the device includes retrieving means for retrieving ancillary information contained in the JPEG header data over a plurality of the sets. In the device, the recording medium stores Exif attribute information as the ancillary information and SOF marker segments over a plurality of the sets together in a specific area on the recording medium, and the retrieving means reads out and retrieves the Exif attribute information and the SOF marker segments on the recording medium together.

To achieve the aforementioned objects, a ninth video recording/reproducing device according to the present invention includes: header assembling means for generating header information containing ancillary information concerning video information; and recording means for recording the header information and the video information as a UDF file. In the device, the recording means records the UDF file so that a file entry corresponding to the UDF file and a part or an entirety of the header information are recorded continuously.

In the ninth video recording/reproducing device, it is preferable that the recording means records file entries and parts or entireties of the header information over the plurality of UDF files together in a specific region on a recording medium.

Further, in the ninth video recording/reproducing device, it is preferable that the video information is JPEG-compressed data, and the header information is JPEG header data, and that the recording means records the file entry corresponding to the UDF file and Exif attribute information contained in the JPEG header continuously.

Still further, in the ninth video recording/reproducing device, it is preferable that the recording means further records a SOF marker segment and/or distance information indicative of a distance between specific marker segments continuously.

To achieve the aforementioned objects, a tenth video recording/reproducing device according to the present invention is a video recording/reproducing device for use with a recording medium that stores a set of video information and header information as a UDF file, the header information containing a reduced image corresponding to the video information, and the device includes reduced image display means for displaying the reduced image by analyzing the header information. In the device, the recording medium stores a file entry corresponding to the UDF file and a part or an entirety of the header information continuously, and the reduced image display means reads out the file entry and the header information at once so as to carry out the analysis and the display.

To achieve the aforementioned objects, an eleventh video recording/reproducing device according to the present invention includes recording means for recording a DCF basic file, and the recording means records: a file entry corresponding to the DCF basic file, a SOI marker, an APP1 marker segment and/or a SOF marker segment, the APP1 marker segment containing Exif attribute information, and a marker segment containing distance information indicative of a distance between specific marker segments, continuously in a first area on a recording medium; and a DCF basic primary image in a second area on the recording medium.

To achieve the aforementioned objects, a twelfth video recording/reproducing device according to the present invention includes recording means for recording a JPEG file composed of a plurality of marker segments, and the recording means records the JPEG file so that a recording start position of a specific marker segment coincides with a boundary between recording units of a recording medium.

To achieve the aforementioned objects, a thirteenth video recording/reproducing device according to the present invention is a video recording/reproducing device for use with a recording medium that stores a JPEG file composed of a plurality of marker segments, and the device includes additional recording means for adding a desired marker segment at a midpoint in a JPEG file. In the device, the recording medium stores a JPEG file so that a recording start position of a specific marker segment coincides with a boundary between recording units. The additional recording means additionally records a desired marker segment, and adjusts an order in which the recording units are referred to so that the desired marker segment is arranged ahead of the specific marker segment.

In the twelfth and thirteenth video recording/reproducing devices, it is preferable that the specific marker segment is a SOF marker segment, a DHT marker segment, or a DQT marker segment.

To achieve the aforementioned objects, a fourteenth video recording/reproducing device according to the present invention includes recording means for recording a DCF basic file, and the recording means records: a SOI marker, an APP1 marker segment containing Exif attribute information, a part of an APP2 marker segment containing FlashPix-related information, in a first area on a recording medium; and the other part of the APP2 marker segment, an application marker segment containing distance information indicative of a distance between specific marker segments, and a DCF basic primary image, in a second area on the recording medium.

To achieve the aforementioned objects, a fifteenth video recording/reproducing device according to the present invention is a video recording/reproducing device for use with a recording medium in which, in a first area thereof, a SOI marker, an APP1 marker segment containing Exif attribute information, and a part of an APP2 marker segment containing FlashPix-related information are recorded, and in a second area thereof, the other part of the APP2 marker segment, an application marker segment containing distance information indicative of a distance between specific marker segments, the other marker segments, and a DCF basic primary image are recorded. The device includes video display means for displaying a DCF basic primary image, and header information analyzing means for analyzing marker segments successively so as to detect a position of a top of the DCF basic primary image. In the device, the header information analyzing means refers to the distance information and skips analysis of a relevant marker segment.

To achieve the aforementioned objects, a sixteenth video recording/reproducing device according to the present invention includes recording means for recording a DCF basic file in a recording medium. In the device, the recording means records entireties of APP1 marker segments containing Exif attribute information over a plurality of the DCF basic files in a first area on the recording medium, and entireties of DCF basic primary images over the plurality of the DCF basic files in a second area of the recording medium, and the first area has a fixed or variable data size of an integral multiple of a recording unit.

To achieve the aforementioned objects, a first video reproducing device according to the present invention is a video reproducing device for use with a recording medium in which video information and header information containing ancillary information concerning the video information are stored. The device includes header information analyzing means for analyzing the header information so as to obtain ancillary information necessary for display of the video information, and the header information contains distance information indicative of a distance between specific pieces of ancillary information, and the header information analyzing means refers to the distance information and skips analysis of relevant ancillary information.

To achieve the aforementioned objects, a second video reproducing device according to the present invention is a video reproducing device for use with a recording medium in which a set of video information and header information containing a reduced image corresponding to the video information are stored as a UDF file. The device includes reduced image display means for displaying the reduced image by analyzing the header information, and the recording medium stores a file entry corresponding to the UDF file and a part or an entirety of the header information continuously, and the reduced image display means reads out the file entry and the header information at once so as to carry out the analysis and the display.

To achieve the aforementioned objects, a seventeenth video recording/reproducing device according to the present invention includes storing means for storing an image file composed of a plurality of information elements, and the storing means stores the image file so that a recording start position of an information element at a midpoint in the image file coincides with a boundary between recording units of a recording medium.

To achieve the aforementioned objects, an eighteenth video recording/reproducing device according to the present invention includes recording means for recording a DCF basic file, and the recording means records: an APP1 marker segment containing Exif attribute information, and a marker and a field length of a specific marker segment, in a first area on a recording medium; a DCF basic primary image in a second area on the recording medium; and the other portion of the specific marker segment in a third area on the recording medium.

To achieve the aforementioned objects, a second video recording/reproducing method according to the present invention includes the step of recording JPEG-compressed data and JPEG header data concerning the JPEG-compressed data as a set so that, when a plurality of sets are recorded, Exif attribute information and SOF marker segments contained in the JPEG header data over the plurality of sets are recorded together in a specific area on a recording medium.

To achieve the aforementioned objects, a third video recording/reproducing method according to the present invention includes: the steps of: storing a set of JPEG-compressed data and JPEG header data concerning the JPEG-compressed data so that Exif attribute information as ancillary information and SOF marker segments contained in the JPEG header data over the plurality of sets are stored together in a specific area on a recording medium; and reading out and retrieving the Exif attribute information and the SOF marker segments on the recording medium together.

To achieve the aforementioned objects, a fourth video recording/reproducing method according to the present invention includes the step of storing a JPEG file composed of a plurality of marker segments in a recording medium so that a recording start position of a specific marker segment coincides with a boundary between recording units of the recording medium.

To achieve the aforementioned objects, a fifth video recording/reproducing method according to the present invention includes the step of recording a DCF basic file so that a SOI marker, an APP1 marker segment containing Exif attribute information, and a part of an APP2 marker segment containing FlashPix-related information are recorded in a first area on a recording medium, while the other part of the APP2 marker segment, an application marker segment containing distance information indicative of a distance between specific marker segments, and a DCF basic primary image are recorded in a second area on the recording medium.

To achieve the aforementioned objects, a sixth video recording/reproducing method according to the present invention includes the steps of recording a DCF basic file in a recording medium, so that entireties of APP1 marker segments containing Exif attribute information are recorded over a plurality of DCF basic files in a first area on the recording medium, and so that entireties of DCF basic primary images are recorded over the plurality of DCF basic files in a second area on the recording medium. In the method, the first area has a fixed or variable data size of an integral multiple of a recording unit.

With any one the foregoing configurations, when a desired marker segment such as meta-data is recorded additionally, only at least a part of the header information concerning the distance information is changed. Therefore, the addition can be carried out within a short time. Further, a time required for completing reproduction is not increased even after a great amount of meta-data are added.

### BRIEF DESCRIPTION OF DRAWINGS

FIG. 1 is a block diagram illustrating a configuration of a video recording/reproducing device according to a first embodiment of the present invention.
FIG. 2 illustrates a data structure and a data arrangement of a JPEG file in the video recording/reproducing device shown in FIG. 1.
FIG. 3 illustrates a data structure and a data arrangement of the JPEG file after addition of meta-data in the video recording/reproducing device of FIG. 1.
FIG. 4 illustrates a data structure and a data arrangement of a conventional JPEG file.
FIG. 5 illustrates a data structure and a data arrangement of the conventional JPEG file after addition of meta-data.
FIG. 6 illustrates a data structure and a data arrangement of a JPEG file after addition of meta-data in a video recording/reproducing device according to a second embodiment of the present invention.
FIG. 7 illustrates a data structure and a data arrangement of a JPEG file after addition of meta-data in a video recording/reproducing device according to a third embodiment of the present invention.
FIG. 8 illustrates a state of file management by the UDF file system with respect to a JPEG file before addition of meta-data in the first embodiment of the present invention.
FIG. 9 illustrates file management information before addition of meta-data in the first embodiment of the present invention.
FIG. 10 illustrates a state of a file management by the UDF file system of the JPEG file after addition of meta-data in the first embodiment of the present invention.
FIG. 11 illustrates file management information after addition of meta-data according to the first embodiment of the present invention.
FIG. 12 illustrates a state of file management state by the UDF file system with respect to a JPEG file in a conventional video recording/reproducing device.
FIG. 13 illustrates a state of file management by the UDF file system with respect to a JPEG file in a conventional video recording/reproducing device.
FIG. 14 illustrates a data structure and a data arrangement of a JPEG file in the first embodiment of the present invention.
FIG. 15 illustrates data areas of an optical disk in the first embodiment of the present invention.
FIG. 16 illustrates a data structure and a data arrangement of a JPEG file after addition of meta-data in the case where only APP4 is used.
FIG. 17 illustrates a data structure and a data arrangement after addition of meta data in the case of a TIFF file.

### DESCRIPTION OF THE INVENTION

The following will describe embodiments of the present invention while referring to the drawings.

### First Embodiment

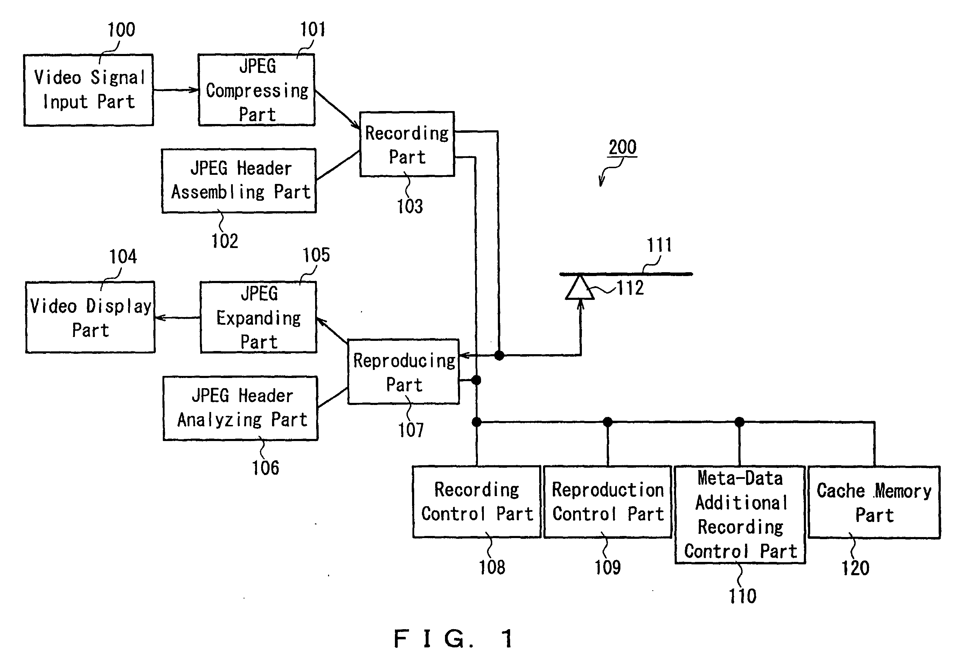

FIG. 1 is a block diagram illustrating a configuration of a video recording/reproducing device according to the first embodiment of the present invention. When a release button (not shown) is pressed, a recording control part 108 causes a static image generated by a video input part 100 to be JPEG-compressed by a JPEG compressing part 101, sends the same to an optical disk 111 via a recording part 103 and a pickup 112, and records a DQT marker segment, a DHT marker segment, a SOF marker segment, a SOS marker segment, the compressed data, and an EOI marker. Next, the recording control part 108 actuates a JPEG header assembling part 102 so as to record a SOI marker, an APP1 marker segment, an APP5 marker segment, and a COM (comment) marker segment. Further, the recording control part 108 records file management information so that the SOI, APP1, APP5, and COM marker segments, the DQT, DHT, SOF, and SOS marker segments, the compressed data, and the EOI segment should be treated as one file. On the other hand, a meta-data additional recording control part 110 stores meta-data in APP4, and an APP4 marker segment is recorded additionally in a JPEG header. It should be noted that the optical disk 111 is under file management by the UDF (universal disk format) file system. Here, a minimum management unit of a logical block is 2 Kbytes, and this unit is referred to as sector.

Further, upon reproduction, according to the control by a reproduction control part 109, signals (JPEG file) are read out of the optical disk 111 via the pickup 112 and a reproducing part 107, and the marker segments contained in the JPEG header portion are analyzed successively from the head by a JPEG header analyzing part 106. Next, the compressed data portion is restored as a static image by a JPEG expanding part 105, and the image is displayed by a video display part 104. In a cache memory part 120, FIDs and file entries of a plurality of static image files, and the APP1 of the static image files, which are recorded in higher concentration on an inner side of the optical disk, are read in and stored beforehand. This makes it unnecessary, when a static image is reproduced, to read the optical disk every time referring to management information and APP1 of a file, while only requiring the reading of the cache memory part 120. Thus, the reproduction of a static image, the reproduction of a thumbnail, and the retrieval of meta-data can be speeded up.

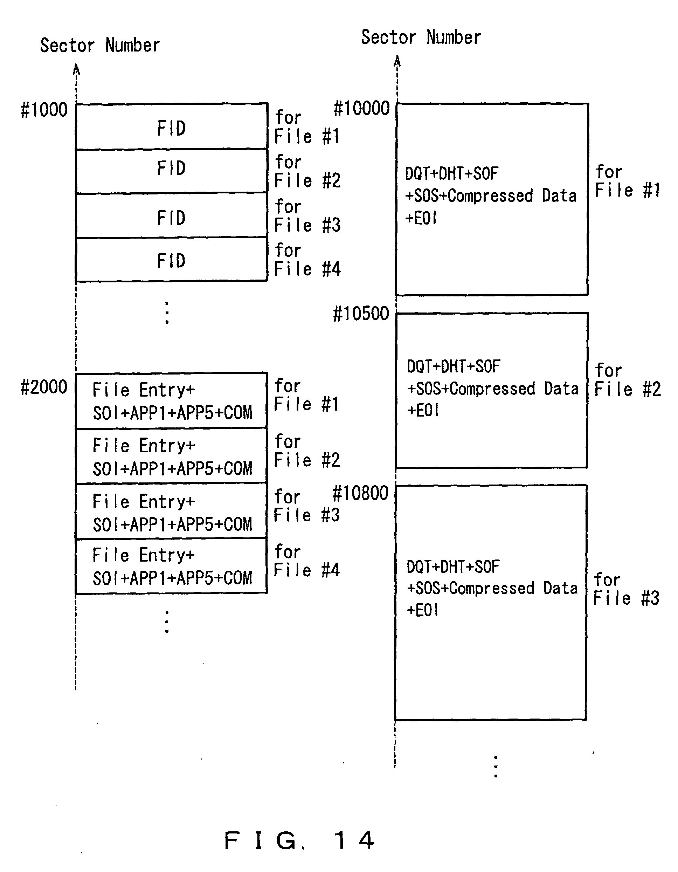

FIG. 14 illustrates a data arrangement of DCF basic files on the optical disk 111. FIDs of the files, and sets of file entry + SOI marker + APP1 marker segment + APP5 marker segment + COM marker segment of the files are grouped, respectively, and are recorded on an inner side of the optical disk 111 (for instance, in a sector numbered as #1000 or #2000). On the other hand, sets of DQT marker segment + DHT marker segment + SOF marker segment + SOS marker segment + compressed data + EOI marker are recorded on an outer side (for instance, in a sector numbered as #10000).

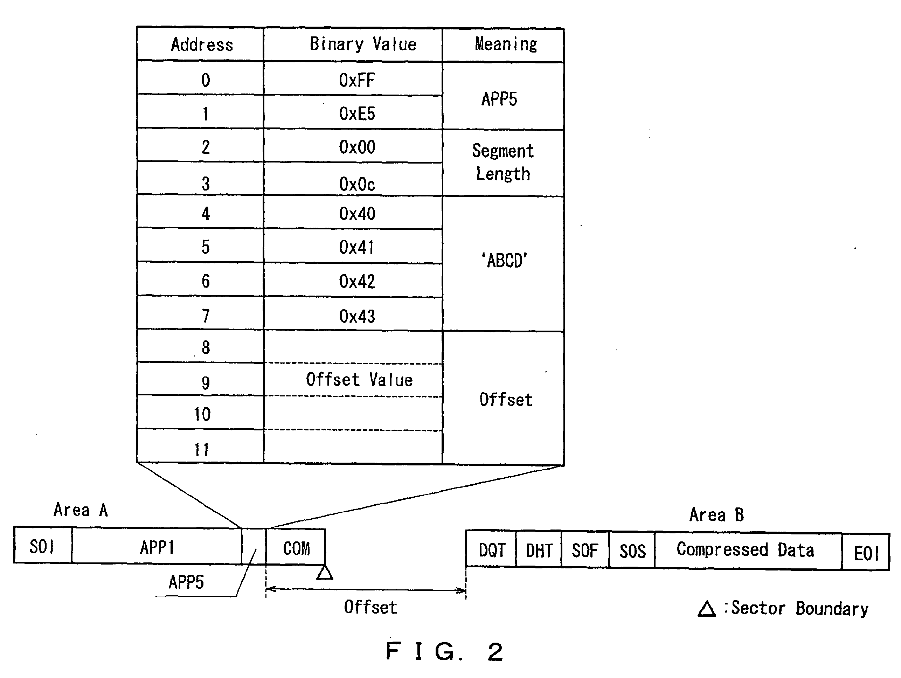

FIG. 2 is a conceptual diagram illustrating a data structure and a data arrangement of a JPEG file (DCF basic file) upon recording of a static image. SOI, APP1, APP5, and COM marker segments in the drawing are recorded, for instance, in an area A on an inner side of the optical disk 111. On the other hand, DQT, DHT, SOF, and SOS marker segments, compressed data, and an EOI marker are recorded in an area B on the outer side of the optical disk 111. Further, the recording is carried out with respect to a plurality of JPEG files so that the data are recorded on the inner side and on the outer side separately, and here, data recorded on the inner side are stored together physically. This is intended to facilitate the immediate reading of pieces of ancillary information of a plurality of files including thumbnail images, which are contained in APP1 of the files. Here, in the APP5 marker segment, a size of data from a head of the COM marker segment to a head of the DQT marker segment is set in the number of bytes as an offset value. Additionally, a character string "ABCD" indicated as a meaning of addresses 4 to 7 in the drawing is data for confirming that a structure of data behind "ABCD" in the marker segment is peculiar to the video recording/reproducing device of the present embodiment. In other words, by searching for an APP5 marker segment upon reproduction of a static image and checking whether the character string "ABCD" is present, it is determined whether the data structure in the APP5 marker segment is peculiar to the video recording/reproducing device of the present embodiment.

Further, the COM marker segment is padding (stuffing) data inserted so as to make an end of the data area ranging from the SOI marker to the COM marker coincide with an end of sectors of the optical disk.

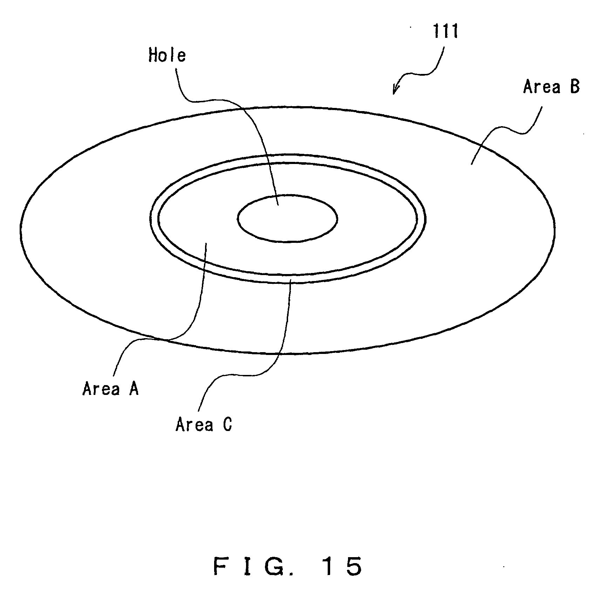

FIG. 15 illustrates a data arrangement of files on the optical disk 111. An area A indicates an area on the inner side of the optical disk 111 in which the portion from a SOI marker to a COM marker segment is recorded. An area C indicates an area slightly on an outer side with respect to the area A, in which an APP4 marker segment is recorded. An area B indicates the area other than the areas A and C, in which the portion from a DQT marker segment to the EOI marker is recorded. Assuming that the pickup 112 stops on the inner side upon initiation of an operation, data on the inner side are easier to read upon initiation of an operation, considering the distance thereto. Further, since meta-data over a plurality of files are concentrated in the areas A and C, the meta-data readily can be taken out at once. On the other hand, in the area B, main bodies of compressed data of images, such as portions each ranging from the DQT marker segment to the EOI marker, are recorded.

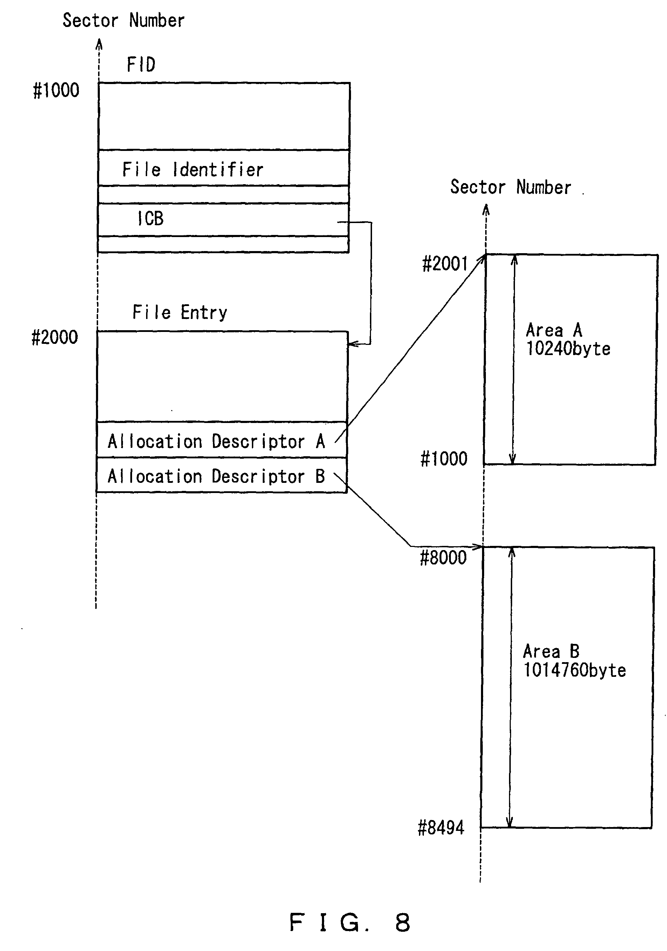

FIG. 8 illustrates a state of file management by the UDF file system with respect to the JPEG file shown in FIG. 2. The areas A and B are referred to by the file entry via allocation descriptors A and B, respectively, and are managed as one file. Further, the file entry is referred to by the FID. The area A has a data size of 10 Kbytes, and the area B has a data size of 1014760 bytes. The file entry and the area A are recorded continuously from a sector numbered as 2000 to a sector numbered as 2005. The FID is recorded in a range from a sector numbered as 1000 on the inner side of the optical disk 111, and the area B is recorded in a range from a sector numbered as 8000 on the outer side.

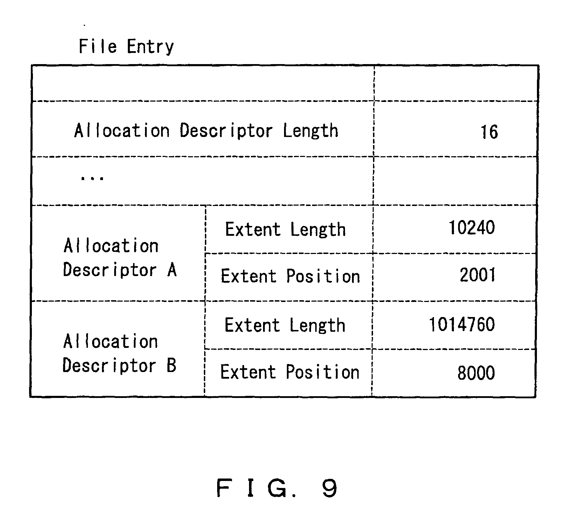

FIG. 9 shows set values of the allocation descriptors A and B in the file entry shown in FIG. 8. The sector number of 2001 is set in an extent position field of the allocation descriptor A, while the data size of 10240 bytes is set in an extent length field thereof. The sector number of 8000 is set in an extent position field of the allocation descriptor B, while the data size of 1014760 bytes is set in an extent length field thereof.

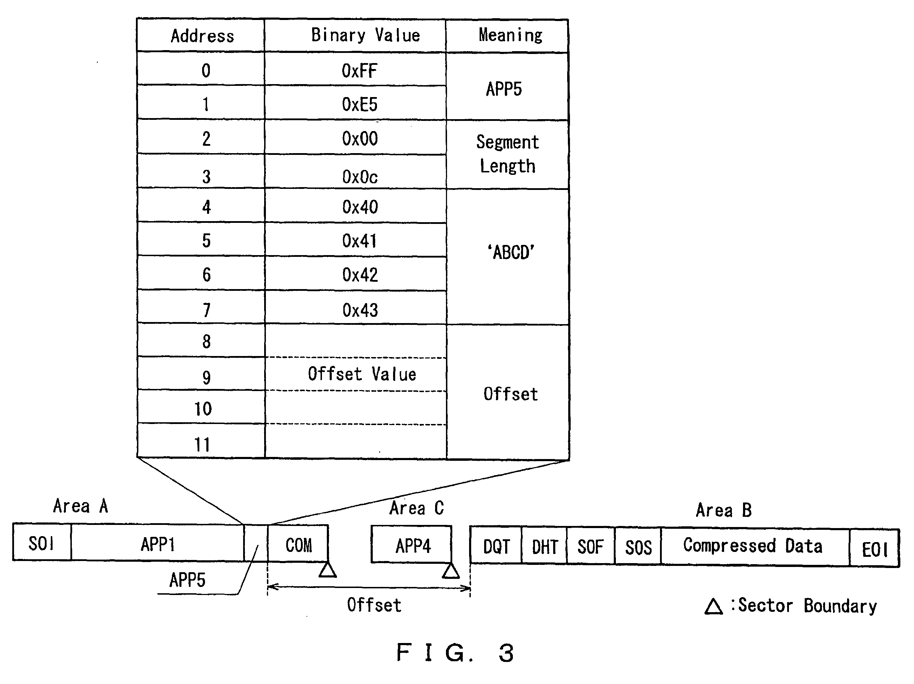

FIG. 3 is a conceptual diagram illustrating a data structure and a data arrangement in the case where an APP4 marker segment in which meta-data are put is recorded additionally at some midpoint in the JPEG file. A data length of the APP4 marker segment is set to be an integral multiple of a sector (in FIG. 3 a value multiplied by one, that is, 2 Kbytes). Further, also when the APP4 marker segment is added, the offset value inside APP5 is set to be a data size of a portion from the COM marker segment till the head of the DQT marker segment.

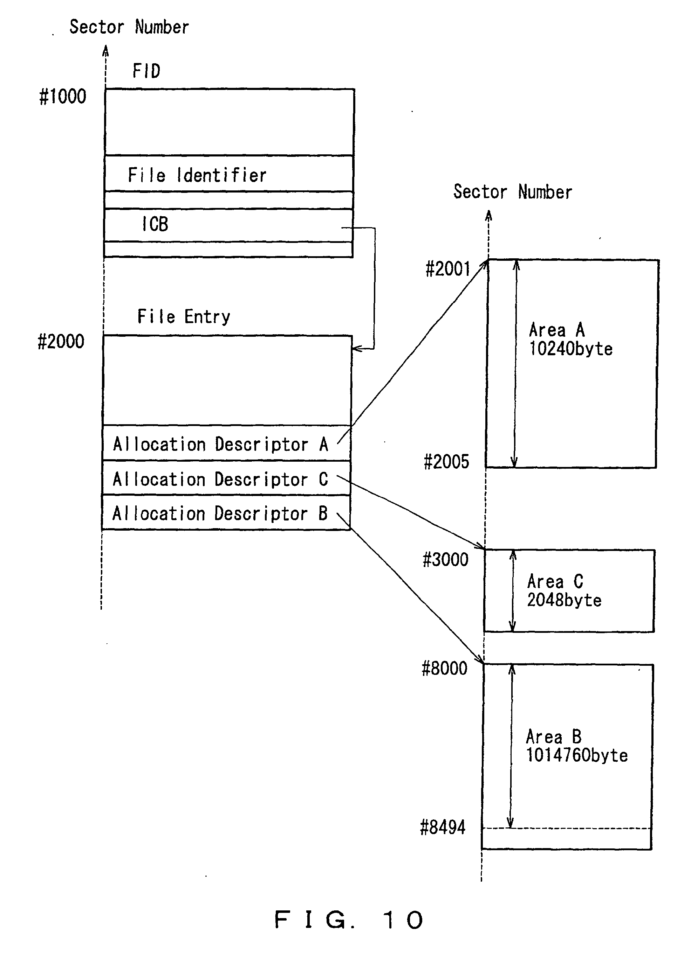

FIG. 10 illustrates file management information of the JPEG file according to the UDF file system shown in FIG. 3. The areas A, C, and B are referred to by the file entry via the allocation descriptors A, C, and B, respectively, and are managed as one file. Further, the file entry is referred to by a FID. The area A has a data size of 10 Kbytes, the area B has a data size of 1014760 bytes, and the area C has a data size of 2048 bytes. The file entry and the area A are recorded continuously from the sector numbered as 2000 to the sector numbered as 2005. The FID is recorded in a range from the sector numbered as 1000 on the inner side of the optical disk 111, the area B is recorded in a range from a sector numbered as 8000 on the outer side, and the area C is recorded in a range from a sector numbered as 3000 on the outer side.

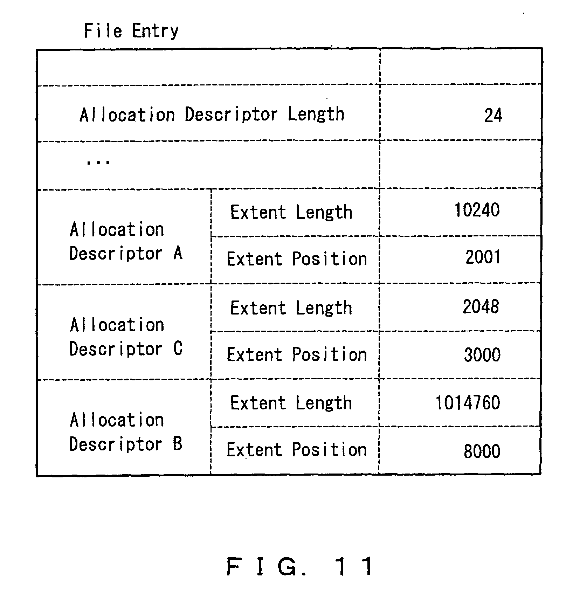

FIG. 11 shows set values of the allocation descriptors A, B, and C in the file entry shown in FIG. 10. The sector number of 2001 is set in an extent position field of the allocation descriptor A, while the data size of 10240 bytes is set in an extent length field thereof. The sector number of 8000 is set in an extent position field of the allocation descriptor B, while the data size of 1014760 bytes is set in an extent length field thereof. The sector number of 3000 is set in an extent position field of the allocation descriptor C, while the data size of 2048 bytes is set in an extent length field thereof.

With the configuration described above, in the case where meta-data in a form of being contained in the APP4 marker segment are inserted into the JPEG file after the JPEG file is recorded, the meta-data additional recording control part 110 is allowed to capture the meta-data into the JPEG file (enables the dealing of the same as one file) only by expanding the allocation descriptor C of the UDF. Further, a value corresponding to the data size of the APP4 is added to the offset value in the APP5, and the addition result is recorded again. With this, upon reproduction of a static image, the reproduction control part 109 analyzes the marker segments successively from the head, and when detecting the APP5 concerned herein, a position of the head of the DQT marker segment can be determined by referring to the offset value inside the APP5, without reading out the APP4 thus added. In other words, when reading the areas A and B successively, the pickup 112 does not have to go through the area C. This surely omits one seek operation. As a result, a time taken for completing the display of the static image can be made equal to that in the case where the meta-data (the APP4) are not present. This means that, for instance, if a movement time during a seek is one second in worst case, an operation time can be reduced by as much as one second.

Further, upon display of thumbnail images, the reproduction control part 109 refers to the FIDs on the cache memory, detects recording positions of the file entries on the cache memory, and reads 12 Kbytes together at once from the optical disk, from the addresses on the cache memory corresponding to the recording positions. By so doing, the APP1 can be obtained. Then, thumbnail images contained in the APP1 marker segments are displayed. Here, in the case where the total number of JPEG files is relatively great, a case can be assumed in which all the FIDs, file entries, and portions corresponding to the area A (hereinafter referred to as area A portions) cannot be accommodated in the cache memory. For instance, a cache memory of 8 Mbytes is only capable of accommodating FIDs and area A portions of approximately 660 images. In the case where the data exceed the foregoing capacity, some JPEG files have area A portions that cannot be cached. In the case where thumbnails of the JPEG files whose area A portions are not cached are reproduced, FIDs, file entries, and area A portions thereof are read out of the optical disk directly, and herein one seek operation can be omitted since the file entries and the area A portions are recorded continuously. This means that in the case where nine thumbnail images are displayed at once, an operation time can be reduced by 0.2 second (access time in the case of a seek with respect to the inner side) × 9 = 1.8 seconds.

### Second Embodiment

FIG. 6 illustrates a data structure obtained by modifying the data structure shown in FIG. 3 slightly. The difference is in that data of the SOF marker segment, arranged in the area B, are moved to the area A. The number of pixels and the number of color samples (4:2:2/4:2:0, etc.) of a static image recorded in a DCF basic file are written only in the SOF marker segment. Therefore, when a plurality of JPEG files are retrieved or sorted by the number of pixels or the number of color samples, an operation time can be shortened significantly since the SOF marker segment is present on the cache memory, as compared with the case where the SOF marker segment is present in a portion corresponding to the area B (hereinafter referred to as area B portion). This means that, for instance, in the case where a movement time during a seek is one second in worst case, the operation time can be reduced by at most an equal number of seconds to the number of files to be retrieved. It should be noted that the FIDs are not recorded together with (physically continuously with) the file entries or the portions ranging from the SOI marker to the COM marker segment. This is because it is disadvantageous upon the retrieval by file name.

### Third Embodiment

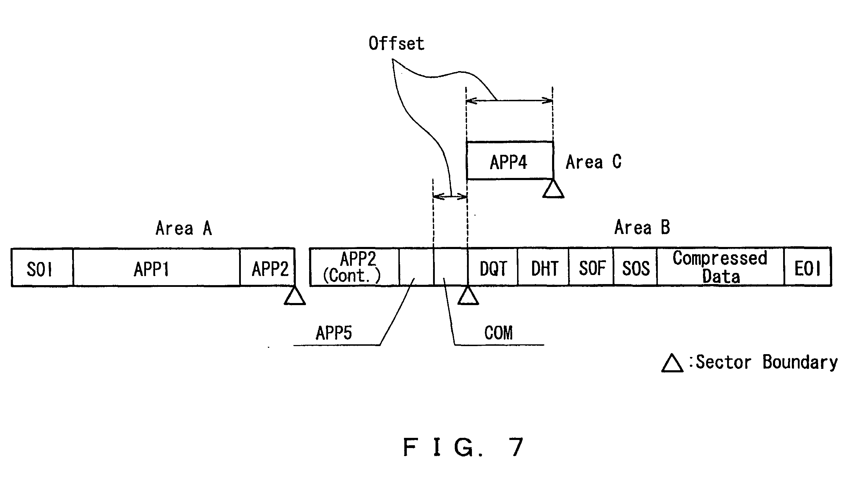

FIG. 7 illustrates a case where the DCF basic file containing the APP2 marker segment along with the APP1 marker segment is recorded according to the DCF standard. Information for facilitating the conversion of the DCF basic file into a FlashPix file format is stored in the APP2 marker segment. Since in many cases the APP2 marker segment has a large data size (for instance, 64 Kbytes) as compared with the APP1 and rarely become targets of retrieval, as well as the area A is finite, it is preferable to avoid storing the APP2 marker segment in the area A portion. Therefore, the data size of the APP2 stored in the area A is limited so as not to exceed a sector boundary (which makes the data size of the APP2 not more than one sector normally), and the rest is recorded in the area B portion. Here, continuously therewith, the APP5 marker segment and the COM marker segment identical to those in the first embodiment are recorded up to a sector boundary. In the case where the APP4 marker segment is added, the file entry is changed so that it is arranged next to the COM marker segment. At the same time, the distance information inside the APP5 is updated. Upon image reproduction after addition of meta-data, the marker segments are analyzed successively from the head of the JPEG file, and when the APP5 marker segment is detected in the way, the offset value recorded therein is referred to and the APP4 marker segment recorded in the area C is skipped. This allows the movement of the pickup from the area B to the area C and the movement thereof from the area C to the area B to be eliminated. In other words, two seek operations can be omitted. This means that if a movement time during a seek is one second in worst case, an operation time can be reduced by as much as two seconds.

It should be noted that though the recording medium is an optical disk in the foregoing embodiments, it may be any recording medium as long as it is in a disk shape, such as a DVD-RAM, a MO (magneto-optical disk), a DVD-R, a DVD-RW, a DVD+RW, a CD-R, a CD-RW or any other optical disk, or a hard disk.

Likewise, though the reading/writing head is a pickup in the foregoing embodiments, it is a combination of a pickup and a magnetic head in the case of an MO, or it is a magnetic head in the case of a hard disk.

Further, though the video compression code is in compliance with the JPEG in the foregoing embodiments, it is needless to say that another code format may be used, for instance, the JPEG 2000 code format, the non-compression code format, etc.

Further, though the files are managed by the UDF file system in the foregoing embodiments, they may be managed by the FAT (file allocation table), the NTFS (NT file system), any one of various types of the UFS (UNIX file system), the Mac OS file system, or any other file system.

Still further, though the offset value in the APP5 shown in FIG. 2 is an offset value till the DQT marker segment in the foregoing embodiments, it may be an offset value till the DHT marker segment in the case where the DHT marker segment is recorded ahead of the DQT marker segment. Likewise, it may be an offset value till the SOF marker segment. Though the offset value is recorded as distance information used for skipping the APP4 marker segment, in the case where another marker segment to be skipped is present between the COM marker segment and the DQT marker segment shown in FIG. 2, the offset value may include a data size of the marker segment.

Furthermore, though the offset value is stored in the JPEG file in the foregoing embodiments, it may be recorded outside the JPEG file.

Furthermore, though a file of a static image in which meta-data and distance information are inserted is a JPEG file in the first embodiment, it may be a file in another file format as long as meta-data can be inserted in a file header, such as a TIFF (tagged image file format) file or a Motion JPEG file. Alternatively, a static image may be recorded in an original file format. However, in such a case, it is needless to say that it is necessary to store meta-data and distance information in a data structure that can be used in the file format standard used.

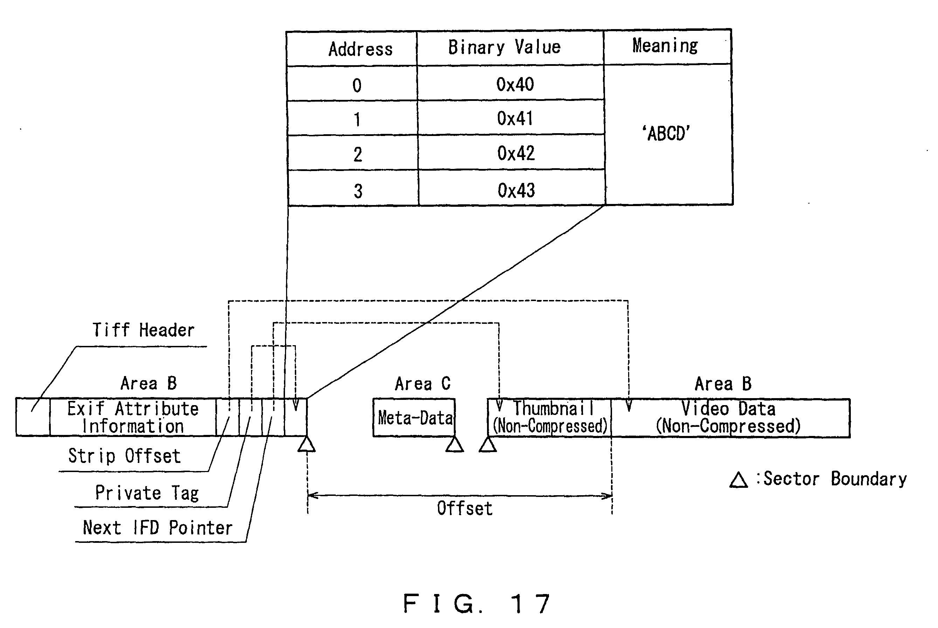

FIG. 17 illustrates an example of a data structure and a data arrangement after addition of meta-data in the case of a TIFF file. Meta-data are added at and after the fifth byte from a position referred to by a private tag field. Up to the fourth byte, characters ("ABCD") for identifying a format, which are the same as those in the first embodiment, are recorded. The added meta-data are recorded in the area C, from the head of the sectors thereof. On the other hand, the thumbnail data are prerecorded in the area B, from the head of the sectors thereof. A next IFD pointer holds a data size up to a position of a non-compressed thumbnail data. Further, a strip offsets field holds a data size up to a head of video data. Further, data ahead of the position at which the meta-data are added and those behind the same preferably are recorded physically continuously in the area B. It should be noted that in this case, since a start position of the video date is found by referring to the strip offsets field, an offset value such as that in the first, second, or third embodiment is unnecessary. The data arrangement as described above facilitates the addition of meta-data and the retrieval of meta-data.

Though the area A portion is 10 Kbytes in the foregoing embodiments, it may have any size as long as it is an integral multiple of the sector size. With this, when a DCF basic file with a different data size is to be written in the optical disk of the present embodiment, it is easier to store the file, as compared with a method in which a thumbnail image is made over with the area A portion being adjusted to a fixed length so that a data size of ancillary information is reduced. More specifically, when an external DCF basic file, taken with another digital camera, is captured, the APP1 marker segment of the file is recorded unchanged, the APP5 and COM marker segments are added with sector boundaries thereof coinciding with each other, and the rest is written in the area B portion. This means that a JPEG file of an image taken by another digital camera, having a different thumbnail data size, can be stored in the optical disk readily. In other words, even JPEG files having various ancillary information data sizes can be captured easily, and the display of thumbnail images, the retrieval of ancillary information, and the addition of ancillary information can be performed at enhanced speed.

Further, in the foregoing embodiments, as to a plurality of JPEG files, APP4 marker segments thereof storing meta-data may be recorded together in a specific recording area. This makes it possible to read meta-data of the plurality of JPEG files immediately in the cache memory, so as to perform the retrieval at enhanced speed.

Still further, though file management information such as FIDs and file entries are concentrated on the inner side of the optical disk in the foregoing embodiments, they may be concentrated on the outer side in the case where the pickup is positioned on the outer side when it is actuated for operating. Alternatively, they may be arranged at a midpoint between the inner side and the outer side as long as they are concentrated and can be read out at once readily.

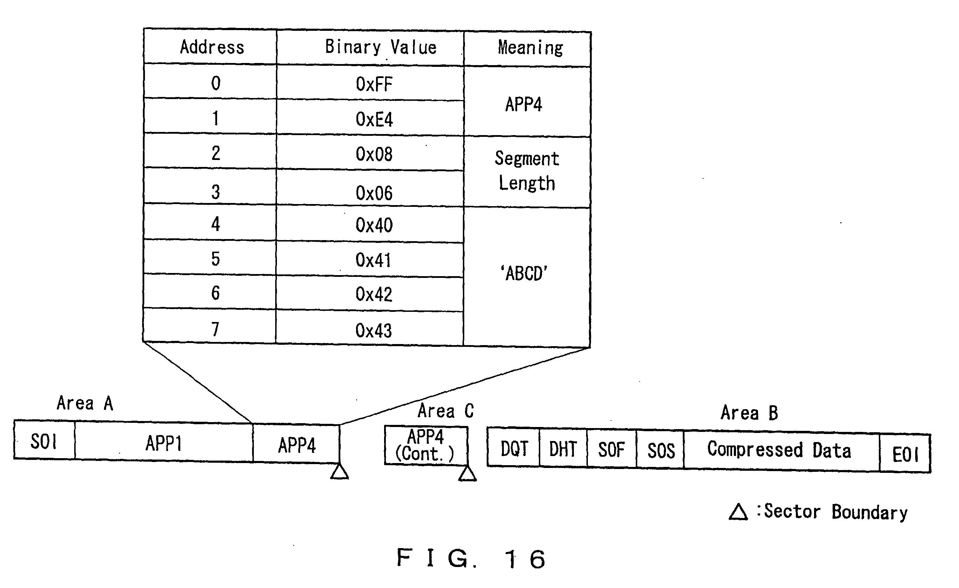

Furthermore, though the APP4 marker segment storing meta-data occupies the area C in the foregoing embodiments, a marker code and a segment length field of the APP4 marker segment may occupy four bytes at the end of the area A as shown in FIG. 16. This makes it possible to find a data size of the area C only by reading the area A, even without the APP5 marker segment having the offset value. By using this data size value, the area C can be skipped. However, in this case, it is necessary to secure an area for storing the top eight bytes of the APP4 beforehand, by employing the COM marker segment. Alternatively, a segment length may be recorded as being six bytes.

Furthermore, though the APP4 and APP5 marker segments are used in the foregoing embodiments, others may be used as long as data can be arranged in compliance with the JPEG standard and the DCF standard. For instance, APP3, APP6 to APP15, or APP0 may be used. The COM marker segment may be used also.

Furthermore, though the file of the static image format before storage of meta-data is a DCF basic file in the foregoing embodiments, it may be in a file format in compliance with the Exif standard (the JEIDA standard, the digital still camera image file format standard), the JFIF standard, or the JPEG standard. However, in such a case, ancillary information such as a thumbnail image is not necessarily contained in the JPEG header portion.

As described above, according to the present invention, compressed data and header information are recorded as one file, and distance information indicative of a distance between specific marker segments is contained in the header information. Therefore, the readout and re-recording of all the data does not have to be carried out, and the operation of adding meta-data and the like can be performed within a significantly short time. Furthermore, it is possible to prevent the display speed upon reproduction from lowering due to the addition of meta-data.

Furthermore, when pieces of ancillary information of image files are retrieved over a plurality of files by the number of pixels or the number of color samples, seeks of the pickup can be reduced, so that the operation is performed at enhanced speed.

Besides, even with a greater number of files, the display of thumbnail images contained in ancillary information of the files can be performed at enhanced speed.

Furthermore, it is possible to readily capture pieces of image information with various ancillary information data sizes, and to perform the display of thumbnail images, the retrieval of ancillary information, and the addition of ancillary information at enhanced speed.

## Claims

1. A video recording/reproducing device, comprising:
header assembling means for generating header information containing ancillary information concerning video information; and
recording means for recording at least the header information and the video information as a set,
wherein the header information contains distance information indicative of a distance between specific pieces of ancillary information.

2. The video recording/reproducing device according to claim 1, wherein the video information is JPEG-compressed data, and the ancillary information is a marker segment.

3. The video recording/reproducing device according to claim 1, wherein when desired ancillary information is added, the header assembling means generates ancillary information containing new distance information with a data size of the desired ancillary information added therein.

4. A video recording/reproducing method comprising the steps of:
assembling a header by generating header information containing ancillary information concerning video information; and
recording at least the header information and the video information as a set,
wherein the header information contains distance information indicative of a distance between specific pieces of ancillary information.

5. The video recording/reproducing method according to claim 4, wherein the video information is JPEG-compressed data, and the ancillary information is a marker segment.

6. The video recording/reproducing method according to claim 4,
wherein, in the header assembling step, when desired ancillary information is added, header information is generated that contains new distance information with a data size of the desired ancillary information added therein.

7. A disk in which at least video information and header information are recorded as a set, the header information containing ancillary information concerning the video information,
wherein the header information contains distance information indicative of a distance between specific pieces of ancillary information present in the header information.

8. The disk according to claim 7, wherein the video information is JPEG-compressed data, and the ancillary information is a marker segment.

9. A video recording/reproducing device for use with a recording medium that stores video information and header information containing ancillary information concerning the video information, the device comprising:
header information analyzing means for analyzing the header information so as to obtain ancillary information necessary for display of the video information,
wherein
the header information contains distance information indicative of a distance between specific pieces of ancillary information, and
the header information analyzing means refers to the distance information and skips analysis of relevant ancillary information.

10. A video recording/reproducing device, comprising recording means for recording a DCF basic file,
wherein the recording means records:
an APP1 marker segment containing Exif attribute information, and a marker segment containing distance information indicative of a distance between specific marker segments, in a first area on a recording medium; and
a DCF basic primary image in a second area on the recording medium.

11. A video recording/reproducing device, comprising recording means for recording a DCF basic file,
wherein the recording means records:
a SOI marker, an APP1 marker segment and/or a SOF marker segment, the APP1 marker segment containing Exif attribute information, and a marker segment containing distance information indicative of a distance between specific marker segments, in a first area on a recording medium; and
a DCF basic primary image in a second area on the recording medium.

12. A video recording/reproducing device, comprising:
header assembling means for generating header information containing ancillary information concerning video information;
recording means for recording at least the header information and the video information as a set; and
distance information recording means for recording distance information relevant to the header information,
wherein the distance information recording means records, as the distance information, distance information indicative of a distance between specific pieces of ancillary information present in the header information.

13. A video recording/reproducing device for use with a recording medium that stores video information, header information containing ancillary information concerning the video information, and distance information indicative of a distance between specific pieces of the ancillary information, the device comprising:
header information analyzing means for analyzing the header information so as to obtain ancillary information necessary for display of the video information,
wherein
the header information analyzing means refers to the distance information and skips analysis of relevant ancillary information.

14. A video recording/reproducing device comprising:
header assembling means for generating JPEG header data concerning JPEG-compressed data; and
recording means for recording at least the JPEG-compressed data and the JPEG header data as a set,
wherein, when a plurality of the sets are recorded, the recording means records Exif attribute information and SOF marker segments contained in the JPEG header data over the plurality of the sets together in a specific area on a recording medium.

15. A video recording/reproducing device for use with a recording medium that stores sets of JPEG-compressed data and JPEG header data, the device comprising:
retrieving means for retrieving ancillary information contained in the JPEG header data over a plurality of the sets,
wherein
the recording medium stores Exif attribute information as the ancillary information and SOF marker segments over a plurality of the sets together in a specific area on the recording medium, and
the retrieving means reads out and retrieves the Exif attribute information and the SOF marker segments on the recording medium together.

16. A video recording/reproducing device, comprising:
header assembling means for generating header information containing ancillary information concerning video information; and
recording means for recording the header information and the video information as a UDF file,
wherein the recording means records the UDF file so that a file entry corresponding to the UDF file and a part or an entirety of the header information are recorded continuously.

17. The video recording/reproducing device according to claim 16, wherein the recording means records a plurality of UDF files so that file entries and parts or entireties of the header information over the plurality of UDF files are recorded together in a specific region on a recording medium.

18. The video recording/reproducing device according to claim 16, wherein
the video information is JPEG-compressed data, and the header information is JPEG header data, and
the recording means records the file entry corresponding to the UDF file and Exif attribute information contained in the JPEG header continuously.

19. The video recording/reproducing device according to claim 18, wherein the recording means further records a SOF marker segment and/or distance information indicative of a distance between specific marker segments continuously.

20. A video recording/reproducing device for use with a recording medium that stores a set of video information and header information as a UDF file, the header information containing a reduced image corresponding to the video information, the device comprising:
reduced image display means for displaying the reduced image by analyzing the header information,
wherein
the recording medium stores a file entry corresponding to the UDF file and a part or an entirety of the header information continuously, and
the reduced image display means reads out the file entry and the header information at once so as to carry out the analysis and the display.

21. A video recording/reproducing device comprising recording means for recording a DCF basic file,
wherein the recording means records:
a file entry corresponding to the DCF basic file, a SOI marker, an APP1 marker segment and/or a SOF marker segment, the APP1 marker segment containing Exif attribute information, and a marker segment containing distance information indicative of a distance between specific marker segments, continuously in a first area on a recording medium; and
a DCF basic primary image in a second area on the recording medium.

22. A video recording/reproducing device comprising recording means for recording a JPEG file composed of a plurality of marker segments,
wherein the recording means records the JPEG file so that a recording start position of a specific marker segment coincides with a boundary between recording units of a recording medium.

23. A video recording/reproducing device for use with a recording medium that stores a JPEG file composed of a plurality of marker segments, the device comprising:
additional recording means for adding a desired marker segment at a midpoint in a JPEG file,
wherein
the recording medium stores a JPEG file so that a recording start position of a specific marker segment coincides with a boundary between recording units, and
the additional recording means additionally records a desired marker segment, and adjusts an order in which the recording units are referred to so that the desired marker segment is arranged ahead of the specific marker segment.

24. The video recording/reproducing device according to claim 22 or 23, wherein the specific marker segment is a SOF marker segment, a DHT marker segment, or a DQT marker segment.

25. A video recording/reproducing device comprising recording means for recording a DCF basic file,
wherein the recording means records:
a SOI marker, an APP1 marker segment containing Exif attribute information, a part of an APP2 marker segment containing FlashPix-related information, in a first area on a recording medium; and
the other part of the APP2 marker segment, an application marker segment containing distance information indicative of a distance between specific marker segments, and a DCF basic primary image, in a second area on the recording medium.

26. A video recording/reproducing device for use with a recording medium in which, in a first area thereof, a SOI marker, an APP1 marker segment containing Exif attribute information, and a part of an APP2 marker segment containing FlashPix-related information are recorded, and in a second area thereof, the other part of the APP2 marker segment, an application marker segment containing distance information indicative of a distance between specific marker segments, the other marker segments, and a DCF basic primary image are recorded, the device comprising:
video display means for displaying a DCF basic primary image; and
header information analyzing means for analyzing marker segments successively so as to detect a position of a top of the DCF basic primary image,
wherein the header information analyzing means refers to the distance information and skips analysis of a relevant marker segment.

27. A video recording/reproducing device, comprising recording means for recording a DCF basic file in a recording medium,
wherein
the recording means records entireties of APP1 marker segments containing Exif attribute information over the DCF basic files in a first area on the recording medium, and entireties of DCF basic primary images of the DCF basic files over the plurality of DCF basic files in a second area of the recording medium, and
the first area has a fixed or variable data size of an integral multiple of a recording unit.

28. A video reproducing device for use with a recording medium in which video information and header information containing ancillary information concerning the video information are stored, the device comprising:
header information analyzing means for analyzing the header information so as to obtain ancillary information necessary for display of the video information,
wherein
the header information contains distance information indicative of a distance between specific pieces of ancillary information, and
the header information analyzing means refers to the distance information and skips analysis of relevant ancillary information.

29. A video reproducing device for use with a recording medium in which a set of video information and header information containing a reduced image corresponding to the video information are stored as a UDF file, the device comprising:
reduced image display means for displaying the reduced image by analyzing the header information,
wherein
a file entry corresponding to the UDF file and a part or an entirety of the header information are stored continuously in the recording medium, and
the reduced image display means reads out the file entry and the header information at once so as to carry out the analysis and the display.

30. A video recording/reproducing device, comprising storing means for storing an image file composed of a plurality of information elements,
wherein the storing means stores the image file so that a recording start position of an information element at a midpoint in the image file coincides with a boundary between recording units of a recording medium.

31. A video recording/reproducing device comprising recording means for recording a DCF basic file,
wherein the recording means records:
an APP1 marker segment containing Exif attribute information, and a marker and a field length of a specific marker segment, in a first area on a recording medium;
a DCF basic primary image, in a second area on the recording medium; and
the other portion of the specific marker segment in a third area on the recording medium.

32. A video recording/reproducing method comprising the step of:
recording JPEG-compressed data and JPEG header data concerning the JPEG-compressed data as a set so that, when a plurality of sets are recorded, Exif attribute information and SOF marker segments contained in the JPEG header data over the plurality of sets are recorded together in a specific area on a recording medium.

33. A video recording/reproducing method comprising the steps of:
storing a set of JPEG-compressed data and JPEG header data concerning the JPEG-compressed data so that Exif attribute information as ancillary information and SOF marker segments contained in the JPEG header data over a plurality of sets are stored together in a specific area on a recording medium; and
reading out and retrieving the Exif attribute information and the SOF marker segments on the recording medium together.

34. A video recording/reproducing method comprising the step of:
storing a JPEG file composed of a plurality of marker segments in a recording medium so that a recording start position of a specific marker segment coincides with a boundary between recording units of the recording medium.

35. A video recording/reproducing method comprising the step of:
recording a DCF basic file so that a SOI marker, an APP1 marker segment containing Exif attribute information, and a part of an APP2 marker segment containing FlashPix-related information are recorded in a first area on a recording medium, while the other part of the APP2 marker segment, an application marker segment containing distance information indicative of a distance between specific marker segments, and a DCF basic primary image are recorded in a second area on the recording medium.

36. A video recording/reproducing method comprising the steps of:
recording a DCF basic file in a recording medium, so that entireties of APP1 marker segments containing Exif attribute information are recorded over a plurality of DCF basic files in a first area on the recording medium, and so that entireties of DCF basic primary images are recorded over the plurality of DCF basic files in a second area on the recording medium,
wherein the first area has a fixed or variable data size of an integral multiple of a recording unit.
